(19) **Europäisches Patentamt / European Patent Office / Office européen des brevets**

(11) **EP 4 485 106 A1**

(12) **EUROPÄISCHE PATENTANMELDUNG**

(43) Veröffentlichungstag:
01.01.2025 Patentblatt 2025/01

(21) Anmeldenummer: 23182350.1

(22) Anmeldetag: **29.06.2023**

(51) Internationale Patentklassifikation (IPC):
**G05B 23/02** (2006.01) **G06N 3/082** (2023.01)
**G06N 20/20** (2019.01)

(52) Gemeinsame Patentklassifikation (CPC):
**G05B 23/024; G05B 23/0213; G06N 3/082;
G06N 20/20**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens AG Österreich
1210 Wien (AT)**

(72) Erfinder: **Schall, Daniel
2020 Hollabrunn (AT)**

(74) Vertreter: **Siemens Patent Attorneys
Postfach 22 16 34
80506 München (DE)**

(54) **DETEKTION VON FEHLERN ODER ANOMALIEN TECHNISCHER VORRICHTUNGEN**

(57) Die Erfindung bezieht sich auf eine Detektion von Fehlern oder Anomalien, wobei auf Basis zumindest einer technischen ersten Vorrichtung (1) mit einer Vorrichtungseigenschaftsmenge ein Modell (8) künstlicher Intelligenz, aufweisend eine Modelleigenschaftsmenge betreffend technische Vorrichtungszustände, trainiert wird. Es wird vorgeschlagen, dass zumindest eine Vorrichtungseigenschaft einer technischen zweiten Vorrichtung (2), wobei die zumindest eine Vorrichtungseigenschaft Teil der Vorrichtungseigenschaftsmenge ist, ausgewählt wird, dass zumindest eine zu der zumindest einen Vorrichtungseigenschaft passende Modelleigenschaft des Modells (8) künstlicher Intelligenz, wobei die zumindest eine Modelleigenschaft Teil der Modelleigenschaftsmenge ist, ausgewählt wird, dass das Modell (8) künstlicher Intelligenz auf die zumindest eine ausgewählte Modelleigenschaft reduziert wird, und dass mittels des reduzierten Modells (8) künstlicher Intelligenz zumindest ein Fehler oder zumindest eine Anomalie der technischen zweiten Vorrichtung (2) detektiert wird.

Dadurch wird eine im Hinblick auf die technische zweite Vorrichtung (2) adaptierte Fehlerdetektion oder Anomaliedetektion erreicht.

FIG 1

## Beschreibung

Die Erfindung betrifft ein computerimplementiertes Verfahren zur Fehlerdetektion oder Anomaliedetektion für technische Vorrichtungen, ein Datenverarbeitungssystem, ein Computerprogrammprodukt und ein System zur Detektion von Fehlern oder Anomalien technischer Vorrichtungen, wobei bei dem computerimplementierten Verfahren auf Basis zumindest einer technischen ersten Vorrichtung mit einer Vorrichtungseigenschaftsmenge in einem ersten Verfahrensschritt ein Modell künstlicher Intelligenz, aufweisend eine Modelleigenschaftsmenge betreffend technische Vorrichtungszustände, trainiert wird.

Bei technischen Vorrichtungen (z.B. Maschinen, Geräten, Apparaten, industriellen Anlagen, Fahrzeugen, Flugzeugen, etc.) werden häufig Diagnose- und/oder Überwachungsverfahren eingesetzt, um z.B. Schäden, Fehler und/oder Störungen rechtzeitig erkennen und beheben zu können und um beispielsweise eine zustandsbasierte, prädiktive Wartung und/oder Instandhaltung umsetzen zu können.

Eine Detektion technischer Anomalien erfolgt häufig mithilfe von Modellen künstlicher Intelligenz, wobei diese Modelle oft im Hinblick auf ein für eine bestimmte Gruppe technischer Vorrichtungen typisches Anomalieverhalten trainiert werden (indem z.B. auf Grundlage kontinuierlicher Auswertung von Messdaten und deren Vergleichs mit Soll-Daten eine Unterscheidung zwischen fehlerfreien und fehlerhaften Zuständen gelernt wird etc.) und dann beispielsweise in einer Überwachung eines Verhaltens einer konkreten technischen Vorrichtung der Gruppe technischer Vorrichtungen eingesetzt werden. Häufig muss mit diesen Modellen eine große Zahl möglicher Konfigurationen technischer Vorrichtungen berücksichtigt werden, weshalb beispielsweise die Überwachung einer konkreten technischen Vorrichtung leistungsstarke Recheneinrichtungen (z.B. Recheneinrichtungen für eine dezentrale Datenverarbeitung) erfordert.

Aus dem Stand der Technik ist beispielsweise die US 2019/0286759 A1 bekannt, in der ein Gerät zur Produktkonfiguration offenbart ist, welches auf Grundlage von Konfigurationsregeln eine Konfiguration eins Produkts ausgibt. Das Gerät umfasst ein regelbasiertes Lernsystem, welches zur Bildung eines neuronalen Netzes und zur Extraktion von Beziehungen zwischen Konfigurationseigenschaften aus dem neuronalen Netz eingerichtet ist. Die Konfigurationsregeln werden mittels der extrahierten Beziehungen zwischen den Konfigurationseigenschaften modifiziert.

Ferner zeigt die WO 2022/225506 A1 ein Verfahren zur Detektion von Fehlern von Fahrwerken, wobei ein Autoencoder mit ersten Beschleunigungsdaten eines ersten Fahrwerks eines ersten Schienenfahrzeugs trainiert wird. Zweite Beschleunigungsdaten werden während eines Betriebs eines zweiten Fahrwerks eines zweiten Schienenfahrzeugs erfasst und von dem Autoencoder empfangen. Mittels des auf Basis der ersten Beschleunigungsdaten trainierten Autoencoder und der von dem Autoencoder empfangenen zweiten Beschleunigungsdaten können Fehler des zweiten Fahrwerks detektiert werden.

Die WO 2019/219756 A1 beschreibt weiterhin ein Verfahren und eine Vorrichtung zur Diagnose und Überwachung von Fahrzeugen, Fahrzeugkomponenten, Fahrwegen und Fahrwegkomponenten. Signale aus Sensormessungen werden an eine Recheneinheit übertragen. Aus einer statistischen Klassifikation oder einer Prädiktion auf Basis der verarbeiteten Signale wird ein technischer Zustandsindikator gebildet, wozu beispielsweise eine Methode maschinellen Lernens eingesetzt sein kann.

Der Erfindung liegt die Aufgabe zugrunde, ein gegenüber dem Stand der Technik weiterentwickeltes, an konkrete Detektionsfunktionen anpassbares Verfahren anzugeben.

Erfindungsgemäß wird diese Aufgabe gelöst mit einem Verfahren nach Anspruch 1, bei dem in einem zweiten Verfahrensschritt zumindest eine Vorrichtungseigenschaft einer technischen zweiten Vorrichtung, wobei die zumindest eine Vorrichtungseigenschaft Teil der Vorrichtungseigenschaftsmenge ist, ausgewählt wird, bei dem in einem dritten Verfahrensschritt zumindest eine zu der zumindest einen Vorrichtungseigenschaft passende Modelleigenschaft des Modells künstlicher Intelligenz, wobei die zumindest eine Modelleigenschaft Teil der Modelleigenschaftsmenge ist, ausgewählt wird, bei dem in einem vierten Verfahrensschritt das Modell künstlicher Intelligenz auf die zumindest eine ausgewählte Modelleigenschaft reduziert wird, und bei dem mittels des in dem vierten Verfahrensschritt reduzierten Modells künstlicher Intelligenz in einem fünften Verfahrensschritt zumindest ein Fehler oder zumindest eine Anomalie der technischen zweiten Vorrichtung detektiert wird.

Durch diese Maßnahme wird eine Anpassung des Modells künstlicher Intelligenz an die technische zweite Vorrichtung erzielt, wodurch eine Fehlerdetektion oder Anomaliedetektion im Hinblick auf die Vorrichtungseigenschaft der technischen zweiten Vorrichtung zielgerichtet vorgenommen werden kann. Ein Fehler kann z.B. ein Zustand, der ohne Eingriff zu einer schwerwiegenden Betriebsstörung oder zu einem akuten Vorrichtungsschaden führen kann, etc. sein. Bei einer Anomalie kann es sich z.B. um einen Zustand, der ohne Eingriff zu einem erhöhten Vorrichtungsverschleiß oder zu einem Fehler führen kann, oder um ein außergewöhnliches Betriebsverhalten (wie z.B. eine Überlast), welches interpretiert werden muss, etc. handeln. Für den fünften Verfahrensschritt kann aufgrund des reduzierten Modells künstlicher Intelligenz z.B. ein reduzierter Prozessorleistungsbedarf erzielt werden. So kann beispielsweise, wenn für Training und Reduktion des Modells künstlicher Intelligenz ein erster Prozessor eingesetzt wird, für die Fehlerdetektion oder Anomaliedetektion ein zweiter Prozessor mit einer, verglichen mit dem ersten Prozessor, geringeren Leistung verwendet werden etc. Dadurch kann beispielsweise eine Durchführung der Fehlerdetektion oder Anomaliedetektion des erfindungsgemäßen Verfahrens in einer Netzwerkperipherie (z.B. für Anwendungen im Zusammenhang mit Edge Computing etc.) ermöglicht werden etc.

Es werden ferner durch das erfindungsgemäße Verfahren durchgängige Prozesse ermöglicht, mit welchen beispielsweise die technische zweite Vorrichtung unter Vermeidung nachträglicher Änderungen bereits ab einem Inbetriebsetzungszeitpunkt im Hinblick auf Fehler oder Anomalien bedarfsgerecht überwacht werden kann, etc.

Ein Training des Modells künstlicher Intelligenz kann auf Grundlage einer einzigen technischen ersten Vorrichtung oder aber auch auf Basis einer Mehrzahl an ersten Vorrichtungen vorgenommen werden. Im Zusammenhang mit der technischen zweiten Vorrichtung kann eine einzige Vorrichtungseigenschaft oder aber auch eine Mehrzahl an Vorrichtungseigenschaften ausgewählt werden. In Bezug auf eine Reduktion des Modells künstlicher Intelligenz kann eine einzige, zu der Vorrichtungseigenschaft oder zu der Mehrzahl an Vorrichtungseigenschaften passende Modelleigenschaft oder eine Mehrzahl an zu der Vorrichtungseigenschaft oder zu der Mehrzahl an Vorrichtungseigenschaften passenden Modelleigenschaften ausgewählt werden.

Weitere vorteilhafte Ausgestaltungen des erfindungsgemäßen Verfahrens ergeben sich aus den Unteransprüchen.

Eine Einordnung einer Anomalie oder eines Fehlers wird beispielsweise ermöglicht, wenn der zumindest eine in dem fünften Verfahrensschritt detektierte Fehler oder die zumindest eine in dem fünften Verfahrensschritt detektierte Anomalie der technischen zweiten Vorrichtung in dem fünften Verfahrensschritt mittels des reduzierten Modells künstlicher Intelligenz klassifiziert wird.

Eine Lastenverteilung im Hinblick auf für das erfindungsgemäße Verfahren einzusetzende Rechenressourcen wird ermöglicht, wenn der erste Verfahrensschritt, der zweite Verfahrensschritt, der dritte Verfahrensschritt und der vierte Verfahrensschritt in einer ersten Recheneinheit eines Datenverarbeitungssystems durchgeführt werden und der fünfte Verfahrensschritt in einer zweiten Recheneinheit des Datenverarbeitungssystems durchgeführt wird, wobei der fünfte Verfahrensschritt während eines Betriebs der technischen zweiten Vorrichtung durchgeführt wird.

So kann beispielsweise die erste Recheneinheit einen ersten Prozessor umfassen, welcher eine höhere Leistung als ein zweiter Prozessor der zweiten Recheneinheit aufweist. Dadurch kann die zweite Recheneinheit beispielsweise als Industriecomputer an einer Netzwerkperipherie ausgeführt sein etc.

Ein besonders realistisches Modell künstlicher Intelligenz kann erreicht werden, wenn zur Unterscheidung zwischen fehlerfreien und fehlerhaften Vorrichtungszuständen das Modell künstlicher Intelligenz in dem ersten Verfahrensschritt auf Basis von Trainings-Messdaten trainiert wird.

Eine Speisung des Modells künstlicher Intelligenz aus einer Datenbasis zum Trainieren des Modells künstlicher Intelligenz wird erzielt, wenn in dem ersten Verfahrensschritt die Trainings-Messdaten aus einem zur Speicherung von Vorrichtungsmessdaten eingerichteten Datenspeicher in das Modell künstlicher Intelligenz eingesetzt werden.

Ein Erhalt präziser Detektionsergebnisse wird gefördert, wenn in dem fünften Verfahrensschritt der zumindest eine Fehler oder die zumindest eine Anomalie der technischen zweiten Vorrichtung auf Basis von Betriebs-Messdaten zu der technischen zweiten Vorrichtung mittels des reduzierten Modells künstlicher Intelligenz detektiert wird.

Hilfreich ist es ferner, wenn in dem zweiten Verfahrensschritt die zumindest eine Vorrichtungseigenschaft der technischen zweiten Vorrichtung mittels eines Produktkonfigurators ausgewählt wird.

Durch diese Maßnahme wird eine bedarfsgerechte und systematische Auswahl der Vorrichtungseigenschaft ermöglicht. Der Produktkonfigurator kann beispielsweise als Variantenbaum etc. ausgeführt sein.

Eine systematische und effiziente Zuordnung der Vorrichtungseigenschaft und der Modelleigenschaft zueinander wird bewirkt, wenn in dem dritten Verfahrensschritt die zumindest eine zu der zumindest einen Vorrichtungseigenschaft passende Modelleigenschaft des Modells künstlicher Intelligenz mittels einer Methode einer schichtweisen Bedeutungsübertragung ausgewählt wird.

Das erfindungsgemäße Verfahren kann, z.B. im Hinblick auf eine automatisierte Überwachung von Vorrichtungszuständen etc., beispielsweise in einem Datenverarbeitungssystem, umfassend Mittel zur Ausführung des erfindungsgemäßen Verfahrens, implementiert sein.

Ein erfolgversprechendes Anwendungsgebiet für das erfindungsgemäße Verfahren wird mit einem Computerprogrammprodukt, umfassend Befehle, die bewirken, dass das erfindungsgemäße Datenverarbeitungssystem das erfindungsgemäße Verfahren ausführt, erschlossen.

Für eine Detektion von Fehlern oder Anomalien z.B. in einer industriellen Umgebung kann ein System zur Detektion von Fehlern oder Anomalien technischer Vorrichtungen, umfassend ein erfindungsgemäßes Datenverarbeitungssystem, in welchem zumindest ein erfindungsgemäßes Computerprogrammprodukt implementiert ist, sowie zumindest eine technische erste Vorrichtung und eine technische zweite Vorrichtung, empfehlenswert sein, bei dem zum Trainieren eines in dem Datenverarbeitungssystem implementierten Modells künstlicher Intelligenz das Datenverarbeitungssystem mit der technischen ersten Vorrichtung signalübertragend verbindbar ist und zur Detektion von Fehlern oder Anomalien der technischen zweiten Vorrichtung mittels des Modells künstlicher Intelligenz das Datenverarbeitungssystem mit der technischen zweiten Vorrichtung signalübertragend verbindbar ist.

Durch diese Maßnahme wird eine effektive Vernetzung von Komponenten des Systems erreicht, welche Funktionen im Zusammenhang mit einem Training und einem Einsatz des Modells künstlicher Intelligenz für Detektionsvorgänge ausführen. Auf Basis von Detektionsvorgängen kann beispielsweise eine Überwachung und/oder eine Diagnose an der technischen zweiten Vorrichtung durchgeführt werden etc.

Das Datenverarbeitungssystem kann beispielsweise über Kabelverbindungen oder Funkverbindungen etc. mit der technischen ersten Vorrichtung und mit der technischen zweiten Vorrichtung verbindbar sein.

Nachfolgend wird die Erfindung anhand von Ausführungsbeispielen näher erläutert.

Es zeigen beispielhaft:

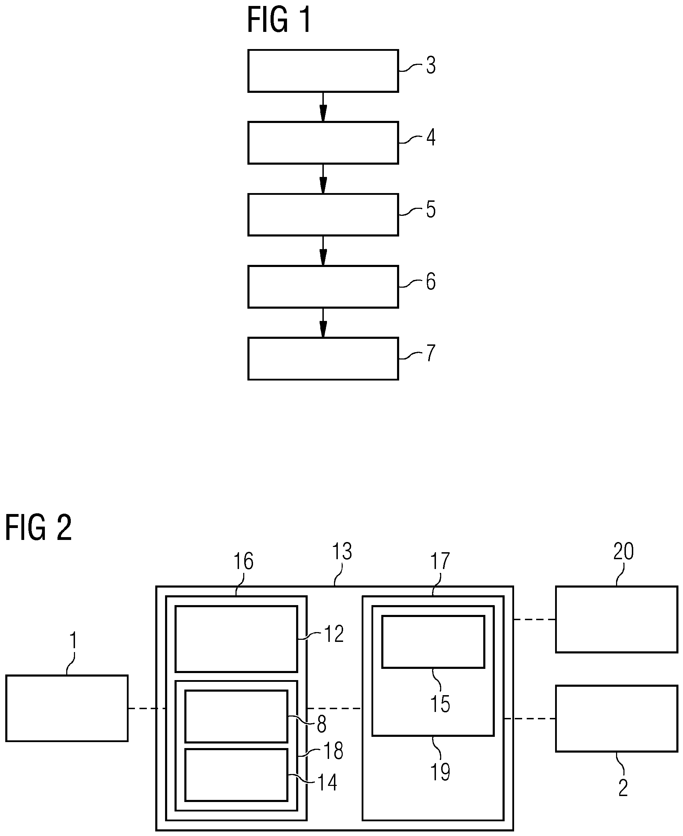

Fig. 1:    Ein Flussdiagramm zu einer beispielhaften Ausführungsvariante eines erfindungsgemäßen Verfahrens zur Fehler- und Anomaliedetektion bei einem Antrieb, für welche ein an Produkteigenschaften dieses Antriebs angepasstes Modell künstlicher Intelligenz eingesetzt wird,

Fig. 2:    Eine schematische Darstellung einer beispielhaften Ausführungsvariante eines erfindungsgemäßen Systems zur Fehler- und Anomaliedetektion mit einem Datenverarbeitungssystem, in welchem zwei Computerprogrammprodukte implementiert sind, sowie mit einem ersten Antrieb und einem zweiten Antrieb, und

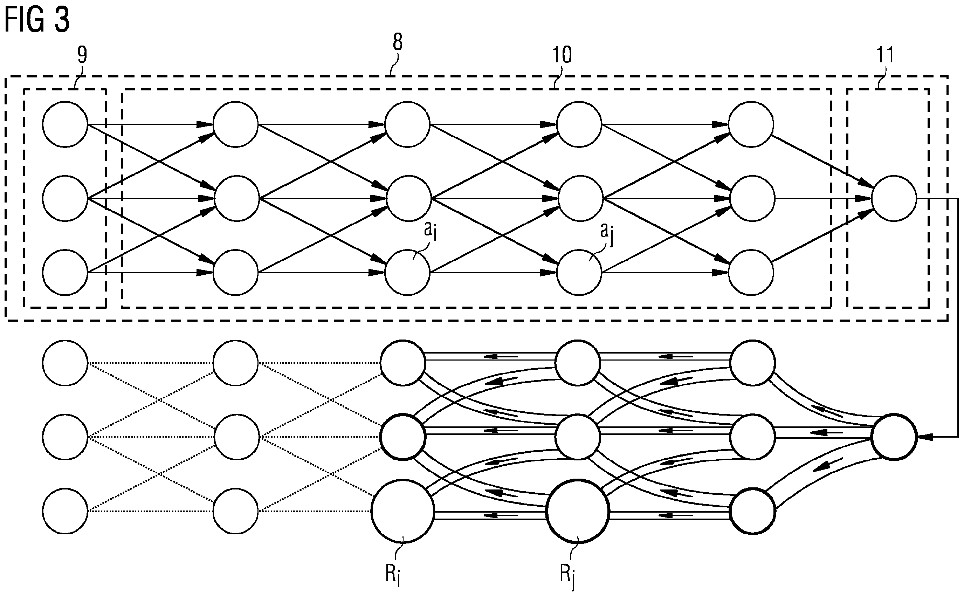

Fig. 3:    Ein Diagramm zu einer im Zusammenhang mit der beispielhaften Ausführungsvariante eines erfindungsgemäßen Verfahrens gemäß Fig. 1 eingesetzten Methode einer schichtweisen Bedeutungsübertragung (Layer-Wise Relevance Propagation - Methode) zur Anpassung eines Modells künstlicher Intelligenz an Produkteigenschaften eines konkreten Antriebs.

Fig. 1 zeigt eine beispielhafte Ausführungsvariante eines erfindungsgemäßen, computerimplementierten Verfahrens zur Anomalie- und Fehlerdetektion für technische Vorrichtungen, wobei auf Basis einer technischen ersten Vorrichtung 1, wie sie beispielhaft in Fig. 2 gezeigt ist, mit einer Vorrichtungseigenschaftsmenge in einem ersten Verfahrensschritt 3 ein Modell 8 künstlicher Intelligenz, wie es beispielhaft in Fig. 2 gezeigt ist und welches eine Modelleigenschaftsmenge betreffend technische Vorrichtungszustände aufweist, trainiert wird.

Die erste Vorrichtung 1 ist als elektrischer erster Antrieb einer ersten Werkzeugmaschine ausgebildet, welche in einer Antriebstestumgebung trainiert wird. Erfindungsgemäß ist es jedoch auch vorstellbar, dass die erste Vorrichtung 1 beispielsweise ein Gerät, ein Apparat (z.B. ein Steuergerät, ein Regler oder ein Reaktor für chemische oder verfahrenstechnische Anwendungen etc.), eine Landmaschine, ein Fahrzeug oder ein Flugzeug etc. ist.

Ferner ist es denkbar, dass das Modell 8 künstlicher Intelligenz z.B. auf Basis einer Mehrzahl an Vorrichtungen (z.B. auf Basis einer Gruppe von Antrieben in der Antriebstestumgebung etc.) trainiert wird.

Die Vorrichtungseigenschaftsmenge umfasst technische Eigenschaften der ersten Vorrichtung 1, wie Implementierungen einer Antriebstemperaturmessfunktion, einer Getriebetemperaturmessfunktion und einer Kühlmittelstandsmessfunktion der ersten Vorrichtung 1 etc.

Das Modell 8 künstlicher Intelligenz ist ein künstliches, tiefes neuronales Netz mit einer definierten Netzstruktur, wie sie beispielhaft in Fig. 3 dargestellt ist.

Die Netzstruktur umfasst Neuronen, welchen zufällige Anfangsgewichte zugeordnet werden.

Das tiefe neuronale Netz umfasst verschiedene Schichten, nämlich eine Eingabeschicht 9, eine Zwischenschichtanordnung 10 und eine Ausgabeschicht 11, welche in Fig. 3 beispielhaft gezeigt sind.

Die Eingabeschicht 9 umfasst Eingabeneuronen, mittels welchen Abweichungen zwischen Ist-Zuständen und Soll-Zuständen der ersten Vorrichtung 1 in Gewichtungsvorgängen im Hinblick auf ein mögliches Vorliegen spezifischer Fehler oder Anomalien gewichtet werden. Ergebnisse dieser Gewichtungsvorgänge werden in die Zwischenschichtanordnung 10 übertragen, wodurch Zwischenschichtneuronen der Zwischenschichtanordnung 10 aktiviert werden.

Über die Ausgabeschicht 11 wird auf Grundlage von Ergebnissen von Gewichtungsvorgängen in der Zwischenschichtanordnung 10 ein Ausgabeneuron aktiviert, welches indiziert, dass ein spezifischer Fehler mit einer spezifischen Wahrscheinlichkeit vorliegt.

Die Abweichungen zwischen Ist-Zuständen und Soll-Zuständen der ersten Vorrichtung 1 betreffen Antriebstemperaturabweichungen zwischen Ist- und Soll-Antriebstemperaturen, Getriebetemperaturabweichungen zwischen Ist- und Soll-Getriebetemperaturen sowie Kühlmittelstandsabweichungen zwischen Ist- und Soll-Kühlmittelständen etc. und es ist mit ihnen eine Bewertung im Hinblick auf ihre Kritikalität verbunden. Folglich kann in der Fehler- und Anomaliedetektion beispielsweise ein bestimmtes Ausmaß einer Antriebstemperaturabweichung als Indikator für einen Antriebsschaden erkannt werden etc.

Eine erste Modellfunktion zur Bewertung von Antriebstemperaturabweichungen, eine zweite Modellfunktion zur Bewertung von Getriebetemperaturabweichungen und eine dritte Modellfunktion zur Bewertung von Kühlmittelstandsabweichungen etc. bilden die Modelleigenschaftsmenge des Modells 8 künstlicher Intelligenz.

Zur Unterscheidung zwischen fehlerfreien und fehlerhaften Zuständen der ersten Vorrichtung 1 wird das Modell 8 künstlicher Intelligenz in dem ersten Verfahrensschritt 3 auf Basis von Trainings-Messdaten, die mittels Sensoren an der ersten Vorrichtung 1 gemessen werden, trainiert. Hierzu werden an der ersten Vorrichtung 1 Antriebstemperaturmessungen, Getriebetemperaturmessungen und Kühlmittelstandsmessungen etc. durchgeführt.

Die gemessenen Trainings-Messdaten werden in dem ersten Verfahrensschritt 3 über Datenübertragungseinrichtungen der Sensoren, die zur Übertragung der Trainings-Messdaten eingerichtet sind, in einen zur Speicherung von Vorrichtungsmessdaten eingerichteten Datenspeicher 12 eines Datenverarbeitungssystems 13, wie es beispielhaft in Fig. 2 gezeigt ist und welches zur Übertragung der Trainings-Messdaten mit der ersten Vorrichtung 1 verbunden wird, übertragen und aus diesem Datenspeicher 12 in das Modell 8 künstlicher Intelligenz eingesetzt. Mittels des Datenverarbeitungssystems 13 wird das Verfahren gemäß Fig. 1 durchgeführt.

Die Trainings-Messdaten repräsentieren Ist-Zustände der ersten Vorrichtung 1. Daten in Bezug auf Soll-Zustände der ersten Vorrichtung 1 und auf eine Bewertung von Fehler- und Anomaliezuständen der ersten Vorrichtung 1 werden aus technischen Spezifikationen und Datenblättern in das Modell 8 künstlicher Intelligenz eingesetzt.

Gewichtungs- und Aktivierungsvorgänge auf Grundlage des tiefen neuronalen Netzes werden kontinuierlich durchgeführt, wobei über Vergleiche von beobachteten und bewerteten Fehler- und Anomaliezuständen der ersten Vorrichtung 1 mit Ergebnissen der Gewichtungs- und Aktivierungsvorgänge die Gewichtungen angepasst werden, um eine möglichst gute Übereinstimmung der beobachteten und bewerteten Fehler- und Anomaliezustände der ersten Vorrichtung 1 mit den Ergebnissen der Gewichtungs- und Aktivierungsvorgänge auf Basis des tiefen neuronalen Netzes zu erhalten.

In einem zweiten Verfahrensschritt 4 werden Vorrichtungseigenschaften einer technischen zweiten Vorrichtung 2, wie sie beispielhaft in Fig. 2 gezeigt ist und welche als elektrischer zweiter Antrieb einer zweiten Werkzeugmaschine ausgebildet ist, mittels eines Produktkonfigurators 14, wie er beispielhaft in Fig. 2 offenbart ist, ausgewählt. In dem Produktkonfigurator 14 ist ein Variantenbaum implementiert, in welchem Vorrichtungsvarianten auf Grundlage der Vorrichtungseigenschaftsmenge mittels boolescher Algebra definiert und auswählbar sind.

Die für die zweite Vorrichtung 2 ausgewählten Vorrichtungseigenschaften betreffen die Antriebstemperaturmessfunktion sowie die Getriebetemperaturmessfunktion. Die ausgewählten Vorrichtungseigenschaften sind demnach eine Teilmenge der Vorrichtungseigenschaftsmenge. Die Kühlmittelstandsmessfunktion wird nicht ausgewählt, da die zweite Vorrichtung 2 keine Einrichtung zur automatischen Kühlmittelstandsmessung aufweist. Kühlmittelstände müssen visuell überprüft werden.

In einem dritten Verfahrensschritt 5 werden zu den ausgewählten Vorrichtungseigenschaften der zweiten Vorrichtung 2 passende Modelleigenschaften des Modells 8 künstlicher Intelligenz mittels einer Methode einer schichtweisen Bedeutungsübertragung ausgewählt.

Als Methode der schichtweisen Bedeutungsübertragung wird eine Layer-Wise Relevance Propagation (LRP) - Methode eingesetzt, wie sie beispielhaft im Zusammenhang mit Fig. 3 beschrieben ist und mittels welcher Neuronen des Modells 8 künstlicher Intelligenz nach ihrer Bedeutung für eine konkrete Anwendung gereiht werden.

Da die zweite Vorrichtung 2 keine Kühlmittelstandsmessfunktion aufweist und daher die dritte Modellfunktion für die Fehler- und Anomaliedetektion nicht benötigt wird, werden in Bezug auf das Modell 8 künstlicher Intelligenz nur die erste Modellfunktion und die zweite Modellfunktion als Modelleigenschaften ausgewählt.

In einem vierten Verfahrensschritt 6 wird dann das Modell 8 künstlicher Intelligenz auf die ausgewählten Modelleigenschaften reduziert, indem die dritte Modelleigenschaft aus dem Modell 8 künstlicher Intelligenz exkludiert wird, da mit der dritten Modelleigenschaft korrespondierende Neuronen zuvor mittels der LRP-Methode als bedeutungslos für die konkrete Anwendung eingestuft wurden. Aus der ersten Modellfunktion und der zweiten Modellfunktion, welche eine Teilmenge der Modelleigenschaftsmenge bilden, wird ein Teilmodell des Modells 8 künstlicher Intelligenz gebildet, wodurch das Modell 8 künstlicher Intelligenz verkleinert wird.

Zur Durchführung der Fehler- und Anomaliedetektion im Zusammenhang mit der zweiten Vorrichtung 2 wird eine Instanz 15 des Modells 8 künstlicher Intelligenz, welche die zu den Vorrichtungseigenschaften der zweiten Vorrichtung 2 passenden Modelleigenschaften repräsentiert, gebildet.

Mittels des in dem vierten Verfahrensschritt 6 reduzierten Modells 8 künstlicher Intelligenz werden nun in einem fünften Verfahrensschritt 7 Fehler und Anomalien der zweiten Vorrichtung 2 auf Basis von Betriebs-Messdaten zu der zweiten Vorrichtung 2 detektiert.

Die Betriebs-Messdaten, welche Antriebstemperaturen und Getriebetemperaturen der zweiten Vorrichtung 2 betreffen, werden mittels Temperatursensoren an der technischen zweiten Vorrichtung 2 gemessen, über ein Signalkabel an das Datenverarbeitungssystem 13 übermittelt, über einen Kabel-Signaleingang des Datenverarbeitungssystems 13 von dem Datenverarbeitungssystem 13 empfangen und in das reduzierte Modell 8 künstlicher Intelligenz eingesetzt.

Über das Signalkabel wird die zweite Vorrichtung 2 mit dem Datenverarbeitungssystem 13 verbunden.

Zur Detektion der Fehler und Anomalien werden Abweichungen technischer Ist-Zustände der zweiten Vorrichtung 2, welche von den Betriebs-Messdaten repräsentiert werden, von technischen Soll-Zuständen der zweiten Vorrichtung 2 betreffend die ausgewählten Vorrichtungseigenschaften und die ausgewählten Modelleigenschaften ausgewertet.

Die Soll-Zustände, aus technischen Spezifikationen und Datenblättern in das Modell 8 künstlicher Intelligenz eingesetzt, und eine Bewertungsmetrik im Hinblick auf eine Kritikalität von Abweichungen zwischen Ist- und Soll-Zuständen sind von dem reduzierten Modell 8 künstlicher Intelligenz umfasst. Die Bewertungsmetrik wird über jenen im Zusammenhang mit dem ersten Verfahrensschritt 3 beschriebenen Trainingsvorgang des Modells 8 künstlicher Intelligenz gebildet.

Eine Anwendung der Soll-Zustände und der Bewertungsmetrik auf die zweite Vorrichtung 2 ist möglich, da die im Hinblick auf die zweite Vorrichtung 2 ausgewählten Vorrichtungseigenschaften eine Teilmenge der Vorrichtungseigenschaftsmenge sind und die im Hinblick auf eine Anwendung des Modells 8 künstlicher Intelligenz auf die zweite Vorrichtung 2 ausgewählten Modelleigenschaften des Modells 8 künstlicher Intelligenz eine Teilmenge der Modelleigenschaftsmenge sind.

Die detektierten Fehler und Anomalien der zweiten Vorrichtung 2, welche durch Ausmaße der Abweichungen zwischen den Ist-Zuständen und Soll-Zuständen der zweiten Vorrichtung 2 repräsentiert sind, werden in dem fünften Verfahrensschritt 7 mittels einer statistischen Klassifikationsmethode klassifiziert. Hierzu wird ein Bayes-Klassifikator eingesetzt, mit welchem Werten von Antriebstemperaturabweichungen und Getriebetemperaturabweichungen sowie zeitlichen Verläufen dieser Werte Wahrscheinlichkeiten für ein Vorliegen eines Antriebsschadens und/oder eines Getriebeschadens zugeordnet werden.

Der erste Verfahrensschritt 3, der zweite Verfahrensschritt 4, der dritte Verfahrensschritt 5 und der vierte Verfahrensschritt 6 werden in einer ersten Recheneinheit 16 des Datenverarbeitungssystems 13 durchgeführt, wobei die erste Recheneinheit 16 für einen Empfang der Trainings-Messdaten von der ersten Vorrichtung 1 signalübertragend mit der ersten Vorrichtung 1 verbunden wird.

Der fünfte Verfahrensschritt 7 wird, während eines Betriebs der technischen zweiten Vorrichtung 2, in einer zweiten Recheneinheit 17 des Datenverarbeitungssystems 13 durchgeführt, wobei die zweite Recheneinheit 17 für einen Empfang der Betriebs-Messdaten von der zweiten Vorrichtung 2 signalübertragend mit der zweiten Vorrichtung 2 verbunden wird.

Der erste Verfahrensschritt 3, der zweite Verfahrensschritt 4, der dritte Verfahrensschritt 5 und der vierte Verfahrensschritt 6 können so im Hinblick auf einzusetzende Prozessorressourcen unabhängig von dem fünften Verfahrensschritt 7 durchgeführt werden.

Ein erster Prozessor der ersten Recheneinheit 16 weist eine höhere Prozessorleistung auf als ein zweiter Prozessor der zweiten Recheneinheit 17.

Bei einem Einsatz der ersten Recheneinheit 16 und der zweiten Recheneinheit 17 handelt es sich um eine günstige Lösung. Erfindungsgemäß ist es jedoch auch vorstellbar, dass der erste Verfahrensschritt 3, der zweite Verfahrensschritt 4, der dritte Verfahrensschritt 5, der vierte Verfahrensschritt 6 und der fünfte Verfahrensschritt 7 beispielsweise mittels einer einzigen Recheneinheit durchgeführt werden, wobei diese einzige Recheneinheit mit der ersten Vorrichtung 1 und der zweiten Vorrichtung 2 verbunden werden kann, etc.

Erfindungsgemäß ist es auch möglich, dass die erste Vorrichtung 1 und die zweite Vorrichtung 2 beispielsweise als Kraftfahrzeuge etc. ausgebildet sind. Teil der Vorrichtungseigenschaftsmenge kann für eine Anwendung des erfindungsgemäßen Verfahrens auf Kraftfahrzeuge beispielsweise eine Abstandsregelungsfunktion eines Tempomats sein. Weist die zweite Vorrichtung 2 z.B. keinen Tempomat auf, so kann eine entsprechende Modellfunktion des Modells 8 künstlicher Intelligenz zur Fehler- und Anomaliedetektion an dem Tempomat bei einem Einsatz des Modells 8 künstlicher Intelligenz in einer Fehler- und Anomaliedetektion an der zweiten Vorrichtung 2 aus dem Modell 8 künstlicher Intelligenz exkludiert werden etc.

Erfindungsgemäß ist es ferner auch denkbar, dass die erste Vorrichtung 1 und die zweite Vorrichtung 2 beispielsweise als Komponenten fahrerloser Transportsysteme (z.B. für einen Transport von Gütern innerhalb eines Lagers etc.) ausgebildet sind. Die erste Vorrichtung 1 und die zweite Vorrichtung 2 können beispielsweise Transportwagen der fahrerlosen Transportsysteme mit Navigationseinrichtungen sein. Teile der Vorrichtungseigenschaftsmenge können für eine Anwendung des erfindungsgemäßen Verfahrens auf fahrerlose Transportsysteme beispielsweise verschiedene Navigationsfunktionen (z.B. eine kamerabasierte erste Navigationsfunktion, eine laserbasierte zweite Navigationsfunktion, etc.) sein. Weist die zweite Vorrichtung 2 z.B. keine kamerabasierte, sondern eine laserbasierte Navigationseinrichtung auf, so kann eine die erste Navigationsfunktion betreffende Modellfunktion des Modells 8 künstlicher Intelligenz zur Fehler- und Anomaliedetektion an der Navigationseinrichtung bei einem Einsatz des Modells 8 künstlicher Intelligenz in einer Fehler- und Anomaliedetektion an der zweiten Vorrichtung 2 aus dem Modell 8 künstlicher Intelligenz exkludiert werden etc.

In Fig. 2 ist ein System zur Detektion von Fehlern oder Anomalien technischer Vorrichtungen, umfassend ein Datenverarbeitungssystem 13, in welcher ein erstes Computerprogrammprodukt 18 und ein zweites Computerprogrammprodukt 19 implementiert sind, sowie eine als elektrischer erster Antrieb ausgeführte, technische erste Vorrichtung 1 und eine als elektrischer zweiter Antrieb ausgeführte, technische zweite Vorrichtung 2 offenbart. Das Datenverarbeitungssystem 13 umfasst Mittel zur Ausführung eines Verfahrens, wie es beispielhaft im Zusammenhang mit Fig. 1 beschrieben ist. Die Mittel umfassen eine erste Recheneinheit 16, in welcher das erste Computerprogrammprodukt 18 implementiert ist, und eine zweite Recheneinheit 17, in welcher das zweite Computerprogrammprodukt 19 implementiert ist.

Das erste Computerprogrammprodukt 18 und das zweite Computerprogrammprodukt 19 umfassen Befehle, die bewirken, dass das Datenverarbeitungssystem 13 das Verfahren gemäß Fig. 1 ausführt.

Zur Detektion von Fehlern und Anomalien der zweiten Vorrichtung 2 mittels des Datenverarbeitungssystems 13 ist das Datenverarbeitungssystem 13 mit der ersten Vorrichtung 1 und der zweiten Vorrichtung 2 signalübertragend verbindbar.

Ein erster Verfahrensschritt 3, ein zweiter Verfahrensschritt 4, ein dritter Verfahrensschritt 5 und ein vierter Verfahrensschritt 6 des Verfahrens gemäß Fig. 1 werden in dem ersten Computerprogrammprodukt 18 der ersten Recheneinheit 16 durchgeführt. Mittels der ersten Recheneinheit 16 wird ein Modell 8 künstlicher Intelligenz auf Basis der ersten Vorrichtung 1 trainiert, werden anschließend Vorrichtungseigenschaften der zweiten Vorrichtung 2 mittels eines in dem ersten Computerprogrammprodukt 18 implementierten, als Variantenbaum ausgebildeten Produktkonfigurators 14 ausgewählt, werden zu den Vorrichtungseigenschaften passende Modelleigenschaften des Modells 8 künstlicher Intelligenz ausgewählt und wird das Modell 8 künstlicher Intelligenz auf die ausgewählten Modelleigenschaften reduziert.

Das Modell 8 künstlicher Intelligenz ist als künstliches, tiefes neuronales Netz ausgebildet und in dem ersten Computerprogrammprodukt 18 implementiert.

Für einen Empfang von Trainings-Messdaten von der ersten Vorrichtung 1 zum Trainieren des Modells 8 künstlicher Intelligenz wird die erste Recheneinheit 16 signalübertragend mit der ersten Vorrichtung 1 verbunden.

Die Trainings-Messdaten werden aus einem zur Speicherung von Vorrichtungsmessdaten eingerichteten und in der ersten Recheneinheit 16 implementierten Datenspeicher 12 in das Modell 8 künstlicher Intelligenz eingesetzt, wofür das erste Computerprogrammprodukt 18 mit dem Datenspeicher 12 interagiert.

Eine Instanz 15 des Modells 8 künstlicher Intelligenz, welche die zu den Vorrichtungseigenschaften der zweiten Vorrichtung 2 passenden Modelleigenschaften repräsentiert, wird mittels des zweiten Computerprogrammprodukts 19 in der zweiten Recheneinheit 17 gebildet. Zur Bildung dieser Instanz 15 werden die erste Recheneinheit 16 und die zweite Recheneinheit 17 signalübertragend miteinander verbunden.

Ein fünfter Verfahrensschritt 7 zur Fehler- und Anomaliedetektion an der zweiten Vorrichtung 2 wird, während eines Betriebs der zweiten Vorrichtung 2, in der zweiten Recheneinheit 17 des Datenverarbeitungssystems 13 durchgeführt, wobei die zweite Recheneinheit 17 für einen Empfang von Betriebs-Messdaten von der zweiten Vorrichtung 2 signalübertragend mit der zweiten Vorrichtung 2 verbunden wird. Auf Grundlage dieser Betriebs-Messdaten und der Instanz 15 des Modells 8 künstlicher Intelligenz wird, wie im Zusammenhang mit Fig. 1 beispielhaft beschrieben, die Fehler- und Anomaliedetektion an der zweiten Vorrichtung 2 durchgeführt.

Auf Basis dieser Fehler- und Anomaliedetektion wird die zweite Vorrichtung 2 überwacht und es werden kritische Zustände der zweiten Vorrichtung 2 diagnostiziert. Eine Diagnose eines kritischen Zustands löst eine visuelle und akustische Warnung aus, welche über eine mit dem Datenverarbeitungssystem 13 verbundene Ausgabeeinheit 20 ausgegeben wird.

Für einen Empfang der Betriebs-Messdaten und Detektionsvorgänge wird die zweite Recheneinheit 17 mit der zweiten Vorrichtung 2 signalübertragend verbunden, wobei die zweite Recheneinheit 17 für einen Empfang der Betriebs-Messdaten einen Kabel-Signaleingang aufweist.

Die erste Vorrichtung 1 und die erste Recheneinheit 16 sind in einer Antriebstestumgebung angeordnet, die zweite Vorrichtung 2 und die zweite Recheneinheit 17 in einer Antriebsbetriebsumgebung an einer Netzwerkperipherie (Edge Computing - Umgebung).

Bei Durchführung des Verfahrens gemäß Fig. 1 erfolgt eine Lastenverteilung im Hinblick auf benötigte Rechenressourcen zwischen der ersten Recheneinheit 16 und der zweiten Recheneinheit 17, wobei ein erster Prozessor der ersten Recheneinheit 16 eine höhere Leistung aufweist als ein zweiter Prozessor der zweiten Recheneinheit 17.

Bei einem Einsatz der ersten Recheneinheit 16 und der zweiten Recheneinheit 17 handelt es sich um eine günstige Lösung. Erfindungsgemäß ist es jedoch auch denkbar, dass der erste Verfahrensschritt 3, der zweite Verfahrensschritt 4, der dritte Verfahrensschritt 5, der vierte Verfahrensschritt 6 und der fünfte Verfahrensschritt 7 beispielsweise mittels einer einzigen Recheneinheit durchgeführt werden, wobei diese einzige Recheneinheit mit der ersten Vorrichtung 1 und der zweiten Vorrichtung 2 verbunden werden kann, etc.

Weiterhin ist es erfindungsgemäß möglich, dass anstelle des ersten Computerprogrammprodukts 18 und des zweiten Computerprogrammprodukts 19 beispielsweise nur ein einziges Computerprogrammprodukt eingesetzt wird (z.B. in einer Rechnerwolke des Datenverarbeitungssystems 13 etc.), auf welches die erste Recheneinheit 16 und die zweite Recheneinheit 17 oder die einzige Recheneinheit zur Durchführung des Verfahrens gemäß Fig. 1 zugreifen, etc.

Fig. 3 zeigt ein Diagramm zu einer im Zusammenhang mit einem Verfahren gemäß Fig. 1 eingesetzten Methode einer schichtweisen Bedeutungsübertragung (Layer-Wise Relevance Propagation - Methode) zur Anpassung eines auf Basis einer beispielhaft in Fig. 2 gezeigten ersten Vorrichtung 1 trainierten Modells 8 künstlicher Intelligenz an Produkteigenschaften einer beispielhaft in Fig. 2 dargestellten zweiten Vorrichtung 2.

Mittels der Layer-Wise Relevance Propagation (LRP) - Methode werden Neuronen des Modells 8 künstlicher Intelligenz, welches als tiefes neuronales Netz ausgebildet ist, in Abhängigkeit ihrer Bedeutung gereiht. Hierbei werden, auf Basis einer Gewichtung und einer Aktivierung von Neuronen, die in einem maschinellen Lernvorgang ausgehend von einer Eingabeschicht 9 über eine Zwischenschichtanordnung 10 bis zu einer Ausgabeschicht 11 vorgenommen wird, ausgehend von einem Neuron der Ausgabeschicht 11, dessen Bedeutung aus dem maschinellen Lernvorgang bekannt ist, Bedeutungen von Neuronen der Zwischenschichtanordnung 10 und schließlich der Eingabeschicht 9 durch einen retrograden Ermittlungsvorgang ermittelt.

Hierbei wird beispielsweise eine Bedeutung eines i-Neurons $a_i$ als i-Relevanz $R_i$ auf Basis einer Aktivierung des i-Neurons $a_i$, eines Gewichtungsfaktors $w_{ij}$ bezüglich einer Gewichtung zwischen dem i-Neuron $a_i$ und einem näher als das i-Neuron $a_i$ an der Ausgabeschicht 11 angeordneten j-Neuron $a_j$ sowie auf Basis einer j-Relevanz $R_j$ des j-Neurons $a_j$ mittels folgender Bildungsvorschrift ermittelt:

$$R_i = \sum_j \frac{a_i w_{ij}}{\sum_{0,i} a_i w_{ij}} R_j$$

Eine spezifische Architektur $A_N$ des tiefen neuronalen Netzes wird durch Zuordnung spezifischer Vorrichtungseigenschaften $V_{1\ldots n}$ zu spezifischen Klassen $K_{1\ldots n}$ des tiefen neuronalen Netzes, welche Modelleigenschaften repräsentieren, gebildet. Relevante Elemente der Architektur $A_N$ wie Neuronen und Gewichtungsfaktoren werden in Abhängigkeit ihrer Relevanz für die spezifischen Klassen $K_{1\ldots n}$ mittels der LRP-Methode ausgewählt, wie folgender Zusammenhang verdeutlicht:

$$A_N = V_1\left(K_1(a_i \ldots a_j), K_2(a_i \ldots a_j), \ldots, K_n(a_i \ldots a_j)\right) \cup V_2\left(K_1(a_i \ldots a_j), \ldots, K_n(a_i \ldots a_j)\right)$$
$$\cup \ldots \cup V_n\left(K_1(a_i \ldots a_j), \ldots, K_n(a_i \ldots a_j)\right)$$

Entsprechende Auswahlvorgänge von Vorrichtungseigenschaften $V_{1\ldots n}$ und Modelleigenschaften sind auch im Zusammenhang mit Fig. 1 beschrieben.

Durch Extraktion von Aktivierungen relevanter Neuronen aus den Klassen $K_{1\ldots n}$ und Exklusion irrelevanter Neuronen wird, wie ebenfalls im Zusammenhang mit Fig. 1 beschrieben, das Modell 8 künstlicher Intelligenz reduziert.

Liste der Bezeichnungen

1    Erste Vorrichtung
2    Zweite Vorrichtung
3    Erster Verfahrensschritt
4    Zweiter Verfahrensschritt
5    Dritter Verfahrensschritt
6    Vierter Verfahrensschritt
7    Fünfter Verfahrensschritt
8    Modell
9    Eingabeschicht
10   Zwischenschichtanordnung
11   Ausgabeschicht
12   Datenspeicher
13   Datenverarbeitungssystem
14   Produktkonfigurator
15   Instanz
16   Erste Recheneinheit
17   Zweite Recheneinheit
18   Erstes Computerprogrammprodukt
19   Zweites Computerprogrammprodukt
20   Ausgabeeinheit

$a_i$     i-Neuron

$a_j$      j-Neuron
$R_i$      i-Relevanz
$R_j$      j-Relevanz
$w_{ij}$      Gewichtungsfaktor
$A_N$      Architektur
$V_{1...n}$      Vorrichtungseigenschaften
$K_{1...n}$      Klassen

**Patentansprüche**

1. Computerimplementiertes Verfahren zur Fehlerdetektion oder Anomaliedetektion für technische Vorrichtungen, wobei auf Basis zumindest einer technischen ersten Vorrichtung (1) mit einer Vorrichtungseigenschaftsmenge in einem ersten Verfahrensschritt (3) ein Modell (8) künstlicher Intelligenz, aufweisend eine Modelleigenschaftsmenge betreffend technische Vorrichtungszustände, trainiert wird, **dadurch gekennzeichnet, dass** in einem zweiten Verfahrensschritt (4) zumindest eine Vorrichtungseigenschaft einer technischen zweiten Vorrichtung (2), wobei die zumindest eine Vorrichtungseigenschaft Teil der Vorrichtungseigenschaftsmenge ist, ausgewählt wird, dass in einem dritten Verfahrensschritt (5) zumindest eine zu der zumindest einen Vorrichtungseigenschaft passende Modelleigenschaft des Modells (8) künstlicher Intelligenz, wobei die zumindest eine Modelleigenschaft Teil der Modelleigenschaftsmenge ist, ausgewählt wird, dass in einem vierten Verfahrensschritt (6) das Modell (8) künstlicher Intelligenz auf die zumindest eine ausgewählte Modelleigenschaft reduziert wird, und dass mittels des in dem vierten Verfahrensschritt (6) reduzierten Modells (8) künstlicher Intelligenz in einem fünften Verfahrensschritt (7) zumindest ein Fehler oder zumindest eine Anomalie der technischen zweiten Vorrichtung (2) detektiert wird.

2. Computerimplementiertes Verfahren nach Anspruch 1, **dadurch gekennzeichnet, dass** der zumindest eine in dem fünften Verfahrensschritt (7) detektierte Fehler oder die zumindest eine in dem fünften Verfahrensschritt (7) detektierte Anomalie der technischen zweiten Vorrichtung (2) in dem fünften Verfahrensschritt (7) mittels des reduzierten Modells (8) künstlicher Intelligenz klassifiziert wird.

3. Computerimplementiertes Verfahren nach Anspruch 1 oder 2, **dadurch gekennzeichnet, dass** in dem fünften Verfahrensschritt (7) der zumindest eine Fehler oder die zumindest eine Anomalie der technischen zweiten Vorrichtung (2) über eine Auswertung zumindest einer Abweichung zumindest eines technischen Ist-Zustands der technischen zweiten Vorrichtung (2) von zumindest einem technischen Soll-Zustand der technischen zweiten Vorrichtung (2) detektiert wird.

4. Computerimplementiertes Verfahren nach einem der Ansprüche 1 bis 3, **dadurch gekennzeichnet, dass** der erste Verfahrensschritt (3), der zweite Verfahrensschritt (4), der dritte Verfahrensschritt (5) und der vierte Verfahrensschritt (6) in einer ersten Recheneinheit (16) eines Datenverarbeitungssystems (13) durchgeführt werden und der fünfte Verfahrensschritt (7) in einer zweiten Recheneinheit (17) des Datenverarbeitungssystems (13) durchgeführt wird, wobei der fünfte Verfahrensschritt (7) während eines Betriebs der technischen zweiten Vorrichtung (2) durchgeführt wird.

5. Computerimplementiertes Verfahren nach einem der Ansprüche 1 bis 4, **dadurch gekennzeichnet, dass** zur Unterscheidung zwischen fehlerfreien und fehlerhaften Vorrichtungszuständen das Modell (8) künstlicher Intelligenz in dem ersten Verfahrensschritt (3) auf Basis von Trainings-Messdaten trainiert wird.

6. Computerimplementiertes Verfahren nach Anspruch 5, **dadurch gekennzeichnet, dass** in dem ersten Verfahrensschritt (3) die Trainings-Messdaten aus einem zur Speicherung von Vorrichtungsmessdaten eingerichteten Datenspeicher (12) in das Modell (8) künstlicher Intelligenz eingesetzt werden.

7. Computerimplementiertes Verfahren nach einem der Ansprüche 1 bis 6, **dadurch gekennzeichnet, dass** in dem fünften Verfahrensschritt (7) der zumindest eine Fehler oder die zumindest eine Anomalie der technischen zweiten Vorrichtung (2) auf Basis von Betriebs-Messdaten zu der technischen zweiten Vorrichtung (2) mittels des reduzierten Modells (8) künstlicher Intelligenz detektiert wird.

8. Computerimplementiertes Verfahren nach Anspruch 7, **dadurch gekennzeichnet, dass** die Betriebs-Messdaten betreffend die technische zweite Vorrichtung (2) über einen Signaleingang eines Datenverarbeitungssystems (13) empfangen werden und in das reduzierte Modell (8) künstlicher Intelligenz eingesetzt werden.

9. Computerimplementiertes Verfahren nach einem der Ansprüche 1 bis 8, **dadurch gekennzeichnet, dass** die technische erste Vorrichtung (1) und die technische zweite Vorrichtung (2) Maschinen, Geräte oder Apparate, insbesondere Antriebe sind.

10. Computerimplementiertes Verfahren nach einem der Ansprüche 1 bis 9, **dadurch gekennzeichnet, dass** die technische erste Vorrichtung (1) und die technische zweite Vorrichtung (2) Komponenten eines fahrerlosen Transportsystems sind.

11. Computerimplementiertes Verfahren nach einem der Ansprüche 1 bis 10, **dadurch gekennzeichnet, dass** in dem zweiten Verfahrensschritt (4) die zumindest eine Vorrichtungseigenschaft der technischen zweiten Vorrichtung (2) mittels eines Produktkonfigurators (14) ausgewählt wird.

12. Computerimplementiertes Verfahren nach einem der Ansprüche 1 bis 11, **dadurch gekennzeichnet, dass** in dem dritten Verfahrensschritt (5) die zumindest eine zu der zumindest einen Vorrichtungseigenschaft passende Modelleigenschaft des Modells (8) künstlicher Intelligenz mittels einer Methode einer schichtweisen Bedeutungsübertragung ausgewählt wird.

13. Computerimplementiertes Verfahren nach einem der Ansprüche 1 bis 12, **dadurch gekennzeichnet, dass** das Modell (8) künstlicher Intelligenz ein künstliches neuronales Netz ist.

14. Datenverarbeitungssystem (13), umfassend Mittel zur Ausführung des Verfahrens nach einem der Ansprüche 1 bis 13.

15. Computerprogrammprodukt, umfassend Befehle, die bewirken, dass das Datenverarbeitungssystem (13) nach Anspruch 14 das Verfahren nach einem der Ansprüche 1 bis 13 ausführt.

16. System zur Detektion von Fehlern oder Anomalien technischer Vorrichtungen, umfassend ein Datenverarbeitungssystem (13) nach Anspruch 14, in welchem zumindest ein Computerprogrammprodukt nach Anspruch 15 implementiert ist, sowie zumindest eine technische erste Vorrichtung (1) und eine technische zweite Vorrichtung (2), **dadurch gekennzeichnet, dass** zum Trainieren eines in dem Datenverarbeitungssystem (13) implementierten Modells (8) künstlicher Intelligenz das Datenverarbeitungssystem (13) mit der technischen ersten Vorrichtung (1) signalübertragend verbindbar ist und zur Detektion von Fehlern oder Anomalien der technischen zweiten Vorrichtung (2) mittels des Modells (8) künstlicher Intelligenz das Datenverarbeitungssystem (13) mit der technischen zweiten Vorrichtung (2) signalübertragend verbindbar ist.

FIG 1

FIG 2

FIG 3

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/058056 A1 (OPSENICA MILJENKO [FI] ET AL) 24. Februar 2022 (2022-02-24) | 1-11, 13-16 | INV. G05B23/02 |
| Y | * Absätze [0030], [0032], [0035], [48and77] - [079.]; Abbildungen 1-7 * | 12 | G06N3/082 G06N20/20 |
| | ----- | | |
| Y | WU HAIYUE ET AL: "Layer-wise relevance propagation for interpreting LSTM-RNN decisions in predictive maintenance", THE INTERNATIONAL JOURNAL OF ADVANCED MANUFACTURING TECHNOLOGY, SPRINGER, LONDON, Bd. 118, Nr. 3-4, 11. September 2021 (2021-09-11), Seiten 963-978, XP037654127, ISSN: 0268-3768, DOI: 10.1007/S00170-021-07911-9 [gefunden am 2021-09-11] * Absätze [05.1], [5.3und6]; Abbildung 2 * | 12 | |
| | ----- | | |
| Y | MUN VLADISLAV ET AL: "Explainable Deep Learning for Brain-Computer Interfaces through Layerwise Relevance Propagation", 2023 11TH INTERNATIONAL WINTER CONFERENCE ON BRAIN-COMPUTER INTERFACE (BCI), IEEE, 20. Februar 2023 (2023-02-20), Seiten 1-5, XP034319603, DOI: 10.1109/BCI57258.2023.10078678 [gefunden am 2023-03-29] * Zusammenfassung * | 12 | RECHERCHIERTE SACHGEBIETE (IPC) G05B G06N |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 24. November 2023 | Juillot, Olivier J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..................................................................................
& : Mitglied der gleichen Patentfamilie, übereinstimmendes
    Dokument

EPO FORM 1503 03.82 (P04C03)

Seite 1 von 2

**Europäisches Patentamt**
**European Patent Office**
**Office européen des brevets**

# EUROPÄISCHER RECHERCHENBERICHT

**Nummer der Anmeldung**

EP 23 18 2350

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | GAO ZHIPENG ET AL: "Data-Efficient Adaptive Global Pruning for Convolutional Neural Networks in Edge Computing", ICC 2023 - IEEE INTERNATIONAL CONFERENCE ON COMMUNICATIONS, IEEE, 28. Mai 2023 (2023-05-28), Seiten 6633-6638, XP034451896, DOI: 10.1109/ICC45041.2023.10278581 [gefunden am 2023-10-23] * Zusammenfassung * ----- | 12 | |
| A | EP 3 736 749 A1 (SIEMENS AG [DE]) 11. November 2020 (2020-11-11) * Ansprüche 1-9; Abbildung 3 * ----- | 1-16 | |
| A | WO 2020/036818 A1 (PRESENSO LTD [IL]; M&B IP ANALYSTS LLC [US]) 20. Februar 2020 (2020-02-20) * Abbildung 4 * ----- | 1-16 | |

| | | | RECHERCHIERTE SACHGEBIETE (IPC) |
|---|---|---|---|

Der vorliegende Recherchenbericht wurde für alle Patentansprüche erstellt

| Recherchenort | Abschlußdatum der Recherche | Prüfer |
|---|---|---|
| München | 24. November 2023 | Juillot, Olivier J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 18 2350

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-11-2023

| Im Recherchenbericht angeführtes Patentdokument | Datum der Veröffentlichung | Mitglied(er) der Patentfamilie | Datum der Veröffentlichung |
|---|---|---|---|
| US 2022058056 A1 | 24-02-2022 | EP 3895009 A1<br>US 2022058056 A1<br>WO 2020122778 A1 | 20-10-2021<br>24-02-2022<br>18-06-2020 |
| EP 3736749 A1 | 11-11-2020 | KEINE | |
| WO 2020036818 A1 | 20-02-2020 | BR 112021002569 A2<br>CN 112534370 A<br>DE 112019004082 T5<br>US 2021157310 A1<br>WO 2020036818 A1 | 04-05-2021<br>19-03-2021<br>10-06-2021<br>27-05-2021<br>20-02-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190286759 A1
- WO 2022225506 A1
- WO 2019219756 A1